# EUROPÄISCHE PATENTSCHRIFT

(11) **EP 1 513 646 B1**
(45) Veröffentlichungstag und Bekanntmachung des Hinweises auf die Patenterteilung: **05.12.2007**
(21) Anmeldenummer: 03717124.6
(22) Anmeldetag: 03.03.2003
(51) Int. Cl.: B23D 59/00, B27G 19/04, B27B 5/29, B23Q 11/00, B23Q 11/08, B24B 55/10

(54) **VERSTELLBARE SPANFÜHRUNG ZUM ABFÜHREN EINES TEILS DER SPÄNE EINER WERKZEUGMASCHINE**
ADJUSTABLE CHIP GUIDE FOR REMOVING PART OF THE CHIPS OF A MACHINE TOOL
GUIDE-COPEAUX REGLABLE DESTINE A L'EVACUATION D'UNE PARTIE DES COPEAUX D'UNE MACHINE-OUTIL

(30) Priorität: 05.06.2002 DE 10224837
(43) Veröffentlichungstag der Anmeldung: 16.03.2005
(73) Patentinhaber: ROBERT BOSCH GMBH, 70442 Stuttgart (DE)
(72) Erfinder: BOHNE, Ulrich, 72664 Kohlberg (DE); ROEHM, Heiko, 70176 Stuttgart (DE)
(74) Vertreter: Daub, Thomas
(86) Internationale Anmeldenummer: PCT/DE2003/000691
(87) Internationale Veröffentlichungsnummer: WO 2003/103883

(56) Entgegenhaltungen:
- EP-A- 0 775 548
- DE-A- 3 843 912
- US-A- 4 201 256
- US-A- 5 319 888
- US-A- 5 927 171
- US-A- 6 108 912

## Beschreibung

### Stand der Technik

Die Erfindung geht aus von einer Werkzeugmaschine gemäß dem Oberbegriff des Anspruchs 1. Eine solche Vorrichtung ist aus US 5,927,171 bekannt.

Bei den meisten bekannten Handkreissägen wird der Benutzer durch eine Abdeckung in Form einer Schutzhaube vor den während des Sägens entstehenden Spänen geschützt. Die Späne werden hierbei durch eine seitliche Austrittsöffnung nach außen abgeführt, wobei die Austrittsöffnung meist einen Standardstutzen aufweist, an den ein Staubsauger oder ein Staubbeutel angeschlossen werden kann. Oftmals werden derartige Handkreissägen jedoch aus Bequemlichkeitsgründen ohne einen Staubsauger oder einen Staubbeutel betrieben, wobei die während des Sägens entstehenden Späne ungehindert aus der Austrittsöffnung austreten. Dadurch wird der Betrieb der Handkreissäge jedoch gestört, da die austretenden Späne den Benutzer direkt am Körper treffen können.

Es ist deshalb bekannt, zum Abführen der Späne einen drehbaren Krümmer vorzusehen, so dass die Richtung der Spanabfuhr durch eine Drehung des Krümmers beeinflusst werden kann. Der Benutzer kann den Krümmer dann so drehen, dass er von den austretenden Spänen nicht getroffen wird.

Aus der US 5,927,171 ist eine Werkzeugmaschine, und zwar eine Tischkreissäge, zur Bearbeitung eines Werkstücks bekannt. Die Werkzeugmaschine umfasst eine Abdeckung zum Schutz eines Benutzers vor im Betrieb entstehenden Bearbeitungsresten des Werkstücks sowie eine verstellbare Resteführung zum Abführen mindestens eines Teils der Bearbeitungsreste durch eine Austrittsöffnung in einer bestimmten Richtung entsprechend der Stellung einer Mündungsöffnung der Resteführung. Hierbei ist bei jeder möglichen Stellung der Resteführung sowohl die Austrittsöffnung der Resteführung selbst wie auch die des Ellbogenstücks nicht verschließbar insofern, dass bei jedem Bearbeitungsmodus Bearbeitungsreste aus der Abdeckung bzw. aus dem mit der Abdeckung fest verschraubten Ellbogenstück austreten. Weiterhin werden die Bearbeitungsreste in jedem Betriebsmodus über das Ellbogenstück abgeführt.

### Vorteile der Erfindung

Diese Aufgabe wird erfindungsgemäß durch die Merkmale des Anspruchs 1 gelöst.

Die Erfindung umfaßt die allgemeine technische Lehre, zum Abführen von Bearbeitungsresten bei einer Werkzeugmaschine eine verstellbare Resteführung vorzusehen, wobei die Resteführung in einer Stellung mindestens einen Teil der Bearbeitungsreste innerhalb der Abdeckung weiterführt und wobei die Resteführung zumindest in einer geschlossenen Stellung der Mündungsöffnung betreibbar ist.

Weitere vorteilhafte Ausführungsformen sind den abhängigen Ansprüche 2 bis 15 zu entnehmen.

Der im Rahmen der Erfindung verwendete Begriff der Bearbeitungsreste ist allgemein zu verstehen und umfaßt neben den bereits eingangs erwähnten Spänen beispielsweise auch Schleifabrieb oder Reste von Zusatzstoffen.

In einer Variante der Erfindung weist die Resteführung ein Schwenkrohr auf, das um eine Schwenkachse schwenkbar ist, die vorzugsweise rechtwinklig zur Längsachse des Schwenkrohrs verläuft. In einer Schwenkstellung des Schwenkrohrs mündet das Schwenkrohr vorzugsweise innerhalb der Abdeckung, wohingegen das Schwenkrohr in einer anderen Schwenkstellung außerhalb der Abdeckung mündet. In Abhängigkeit von der Schwenkstellung des Schwenkrohrs werden die Bearbeitungsreste also von dem Schwenkrohr nach außen abgeführt oder innerhalb der Abdeckung weitergeführt.

In einer anderen Variante der Erfindung weist die Resteführung dagegen ein Schwenkrohr auf, das um eine Drehachse drehbar ist. Vorzugsweise ist die Drehachse hierbei gegenüber der Längsachse des Schwenkrohrs angewinkelt, wobei Winkel zwischen 10° und 50° vorteilhaft sind.

Vorzugsweise ist zur Zuführung der Bearbeitungsreste ein Zuleitungsrohr vorgesehen, das in das Schwenkrohr mündet und vorzugsweise den gleichen Durchmesser wie das Schwenkrohr aufweist.

Hierbei ist die Drehachse vorzugsweise auch gegenüber der Längsachse des Zuleitungsrohrs angewinkelt, wobei die Längsachsen des Zuleitungsrohrs einerseits und des Schwenkrohrs andererseits mit der Drehachse vorzugsweise den gleichen Winkel einschließen. Vorteilhaft daran ist, daß das Schwenkrohr in einer Drehstellung genau parallel zu dem Zuleitungsrohr verläuft, da sich die Neigungswinkel des Zuleitungsrohrs und des Schwenkrohrs gegenseitig aufheben.

Darüber hinaus ist hierbei vorzugsweise vorgesehen, daß sich die Drehachse mit den Längsachsen des Zuleitungsrohrs und des Schwenkrohrs in einem gemeinsamen Schnittpunkt schneidet. Dies bietet den Vorteil, daß das Schwenkrohr in einer Drehstellung nicht nur parallel zu dem Zuleitungsrohr verläuft, sondern mit diesem fluchtet.

Vorzugsweise sind die Außenkonturen des Zuleitungsrohrs und des Schwenkrohrs an der Stoßstelle kreisrund, wobei das Zuleitungsrohr und das Schwenkrohr an der Stoßstelle vorzugsweise den gleichen Außendurchmesser aufweisen. Dies bietet den Vorteil, daß bei einer Drehung des Schwenkrohrs keine Sprünge an der Stoßstelle auftreten.

Besonders vorteilhaft ist es, wenn die Außenkontur des Schwenkrohrs und die Außenkontur des Zuleitungsrohrs an der Stoßstelle zwischen dem Schwenkrohr und dem Zuleitungsrohr jeweils mit demselben Außendurchmesser sphärisch geformt sind, so daß die Stoßstelle kugelförmig ausgebildet ist. Durch diese Kugelform wird die Drehfunktion der Stoßstelle für den Benutzer verdeutlicht. Vorzugsweise ist der Außendurchmesser der sphärisch geformten Anschlußstücke des Zuleitungsrohrs und des Schwenkrohrs größer als der normale Außendurchmesser des Zuleitungsrohrs bzw. des Schwenkrohrs, um die Kugelform optisch hervorzuheben.

In einer weiteren Variante der Erfindung weist die Resteführung dagegen einen vorzugsweise trommelförmigen Drehschieber auf, der um eine vorgegebene Drehachse drehbar ist. In Abhängigkeit von seiner Drehstellung führt der Drehschieber die Bearbeitungsreste innerhalb der Abdeckung weiter oder gibt diese durch eine Austrittsöffnung nach außen ab.

In einer bevorzugten Ausführungsform weist der Drehschieber ein integriertes Führungsrohr auf, das sich mit dem Drehschieber dreht. Das Führungsrohr kann die Bearbeitungsreste dann in Abhängigkeit von der Drehstellung des Drehschiebers in unterschiedliche Richtungen abgeben.

Zur Erleichterung der manuellen Drehung des Drehschiebers sind vorzugsweise Bedienungselemente vorgesehen, wie beispielsweise Griffmulden, eine Rändelstruktur an der Oberfläche oder ein Hebel.

In der bevorzugten Ausführungsform weist die Resteführung einen Anschlußstutzen auf, an den ein Staubbeutel oder ein Staubsauger angeschlossen werden kann. Die Fixierung des Staubbeutels bzw. des Staubsaugerschlauchs auf dem Anschlußstutzen kann beispielsweise durch eine Klemmverbindung erfolgen, indem ein Anschlußstück des Staubbeutels bzw. des Staubsaugerschlauchs klemmend aufgesteckt wird.

Vorzugsweise weist der Anschlußstutzen deshalb eine konische Form auf, um die Klemmwirkung zu verbessern. In einer Variante hat der Anschlußstutzen hierbei eine Außenform, die sich zu dem distalen Ende des Anschlußstutzen hin konisch verjüngt, so daß das entsprechende Anschlußstück des Staubbeutels bzw. des Staubsaugerschlauchs beim Aufstecken zunehmend verklemmt. In einer anderen Variante weist der Anschlußstutzen dagegen eine Innenform auf, die sich zu dem distalen Ende des Anschlußstutzens hin konisch erweitert, so daß das Anschlußstück des Staubbeutels bzw. des Staubsaugerschlauchs beim Hineinstecken zunehmend verklemmt.

Vorzugsweise ist die Resteführung so geformt und verstellbar, daß die Resteführung in einer Stellung eine gemeinsame Außenkontur mit der Abdeckung aufweist.

Bei allen vorstehend beschriebenen Ausführungsformen kann die Verstellung der Resteführung kontinuierlich oder stufenweise erfolgen.

Bei einer stufenweisen Verstellung der Resteführung können Rastmittel vorgesehen sein, so daß die Resteführung in einer oder mehreren Raststellungen einrastet. Vorzugsweise ermöglichen derartige Rastmittel mindestens zwei verschiedene Raststellungen, wobei die Resteführung die Bearbeitungsreste in der einen Raststellung innerhalb der Abdeckung weiterführt, wohingegen die Bearbeitungsreste in der anderen Raststellung nach außen abgeführt werden. In der bevorzugten Ausführungsform sind jedoch mehrere Raststellungen vorgesehen, damit der Benutzer die Resteführung so verstellen kann, daß die im Betrieb entstehenden Bearbeitungsreste in die gewünschte Richtung abgeführt werden.

Ferner kann ein Federelement vorgesehen sein, das die Resteführung in eine Stellung bringt, in der die Bearbeitungsreste innerhalb der Abdeckung weitergeführt werden. Nach der Entfernung eines Staubbeutels bzw. eines Staubsaugerschlauchs sorgt das Federelement dann automatisch dafür, daß die im Betrieb entstehenden Bearbeitungsreste innerhalb der Abdeckung weiter geführt werden, um eine Störung des Betriebs zu vermeiden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a: eine erfindungsgemäße Handkreissäge mit einem eingeklappten Schwenkrohr zum Abführen von Sägespänen,
- Fig. 1b: eine perspektivische Detaildarstellung des Schwenkrohrs aus Fig. 1a im angeklappten Zustand,
- Fig. 1c: eine perspektivische Detaildarstellung des Schwenkrohrs aus Fig. 1a im ausgeklappten Zustand,
- Fig. 2a: ein alternatives Ausführungsbeispiel einer erfindungsgemäßen Handkreissäge mit einem trommelförmigen Drehschieber zum Abführen von Sägespänen, wobei der Drehschieber geschlossen ist,
- Fig. 2b: die Handkreissäge aus Figur 2a mit einem seitlich geöffneten Drehschieber,
- Fig. 2c: die Handkreissäge aus Figur 2a mit einem nach oben geöffneten Drehschieber,
- Fig. 3a: ein alternatives Ausführungsbeispiel einer erfindungsgemäßen Handkreissäge mit einem Schwenkrohr im geschlossenen Zustand,
- Fig. 3b: die Handkreissäge aus Figur 3a mit einem nach hinten geöffneten Schwenkrohr,
- Fig. 3c: eine Seitenansicht der Handkreissäge aus Figur 3a,
- Fig. 3d: die Handkreissäge aus Figur 3a, wobei das Schwenkrohr schräg nach außen geklappt ist,
- Fig. 4a-4d: ein alternatives Ausführungsbeispiel einer erfindungsgemäßen Handkreissäge.

### Beschreibung der Ausführungsbeispiele

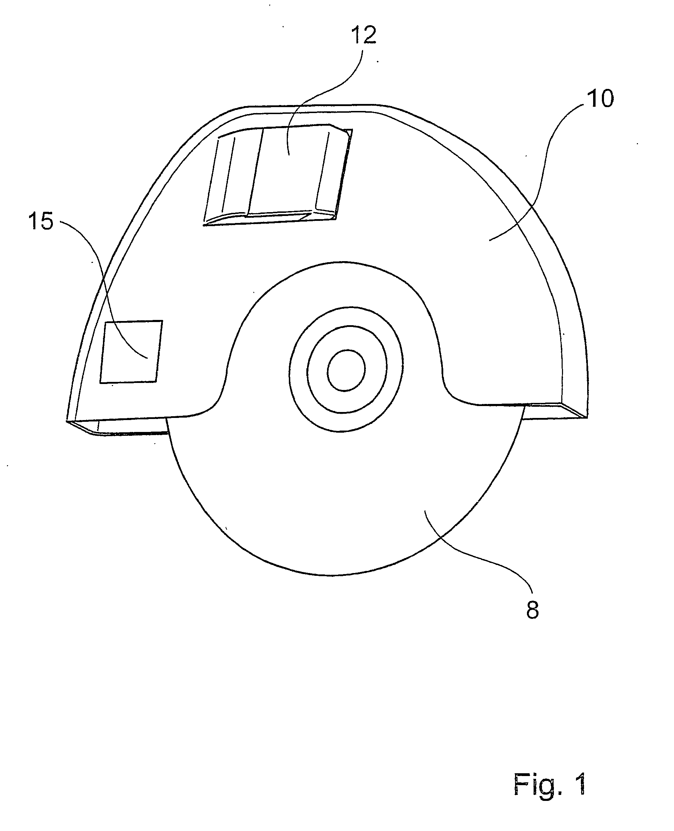

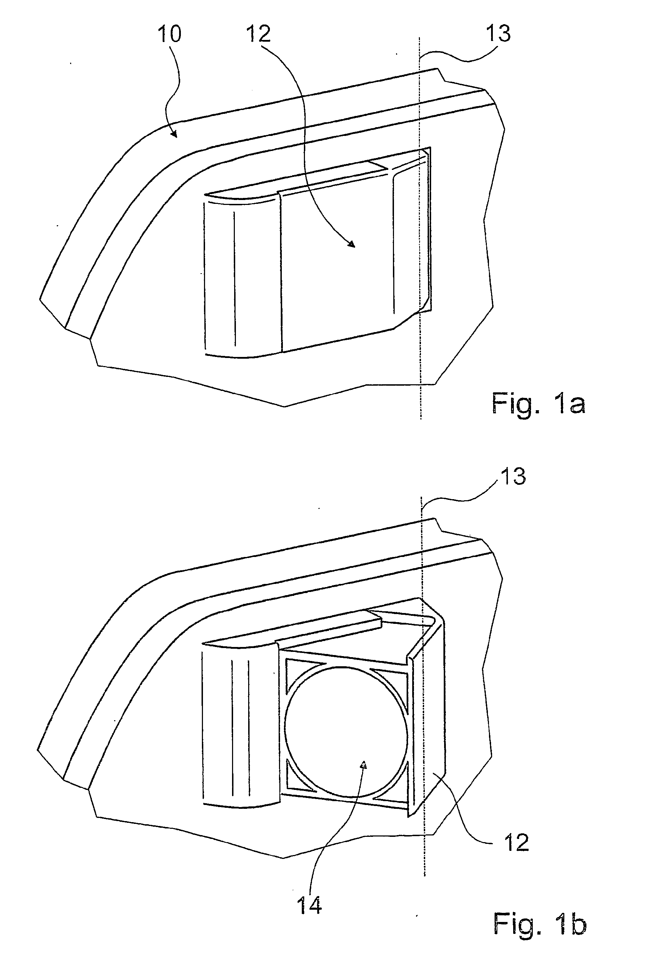

Die in den Figuren 1a bis 1c perspektivisch dargestellte Handkreissäge ist weitgehend herkömmlich aufgebaut und weist einen Elektromotor auf, der ein Sägeblatt 8 antreibt.

Das Sägeblatt 8 wird hierbei durch eine Abdeckung 10 in Form einer Schutzhaube abgedeckt, um den Benutzer vor den während des Betriebs entstehenden Sägespänen zu schützen und eine Verletzung durch das Sägeblatt 8 zu verhindern.

An der Seite der Abdeckung 10 ist eine Klappe 12 mit einem integrierten Schwenkrohr 14 angeordnet, wobei die Klappe 12 um eine Schwenkachse 13 geschwenkt werden kann, die parallel zur Ebene des Sägeblatts 8 verläuft.

In dem in Figur 1a und 1b dargestellten Zustand der Handkreissäge ist die Klappe 12 eingeklappt, so daß die während des Betriebs entstehenden Sägespäne innerhalb der Abdeckung 10 nach hinten (in der Zeichnung nach links) geführt werden und dort durch eine am unteren Ende der Abdeckung 10 befindliche seitliche Austrittsöffnung 15 oder direkt aus der Abdeckung 10 nach unten abgeführt werden.

Im Gegensatz dazu ist die Klappe 12 in dem in Figur 1b dargestellten Zustand ausgeklappt, so daß die Mündungsöffnung des Schwenkrohrs 14 frei liegt. Die im Betrieb der Handkreissäge entstehenden Sägespäne werden deshalb durch das Schwenkrohr 14 seitlich abgeführt.

Zur Aufnahme der aus dem Schwenkrohr 14 austretenden Sägespäne kann ein Staubbeutel oder ein Staubsaugerschlauch an das Schwenkrohr 14 angeschlossen werden. Das Schwenkrohr 14 bildet deshalb im Bereich seiner äußeren Mündungsöffnung einen Anschlußstutzen für einen Staubbeutel oder einen Staubsaugerschlauch, wobei der Anschlußstutzen konisch geformt ist, um durch eine Klemmwirkung einen festen Sitz des Staubbeutels bzw. des Staubsaugerschlauchs auf dem Anschlußstutzen zu erreichen. Der Innendurchmesser des Schwenkrohrs 14 verjüngt sich also nach innen konisch mit demselben Kegelwinkel, mit dem sich auch die entsprechenden Anschlußstutzen herkömmlicher Staubbeutel bzw. Staubsaugerschläuche verjüngen, wodurch ein guter Klemmsitz erreicht wird.

Der Klappmechanismus weist ferner ein Federelement auf, das die Klappe 12 mit dem Schwenkrohr 14 selbständig einklappt, wenn kein Staubbeutel bzw. Staubsaugerschlauch angeschlossen ist.

Es ist jedoch alternativ auch möglich, daß der Klappmechanismus Rastelemente aufweist, welche die Klappe 12 entweder im eingeklappten Zustand oder im ausgeklappten Zustand verriegeln. Dies ermöglicht auch ohne einen Staubbeutel oder einen Staubsaugerschlauch vorteilhaft einen Betrieb der Handkreissäge mit ausgeklapptem Schwenkrohr 14, um die im Betrieb entstehenden Sägespäne seitlich abzuführen.

Weiterhin ist zu erwähnen, daß die Klappe 12 die Abdeckung 10 im geschlossenen Zustand seitlich vollständig abdichtet, so daß keine Sägespäne seitlich entweichen können. Die Konturen der Abdeckung 10 und der Klappe 12 sind darüber hinaus so aneinander angepaßt, daß zwischen der Abdeckung 10 und der Klappe 12 nur minimale Spalte entstehen, so daß die Sägespäne im ausgeklappten Zustand ausschließlich durch das Schwenkrohr 14 entweichen, wohingegen Nebenströmungen verhindert werden.

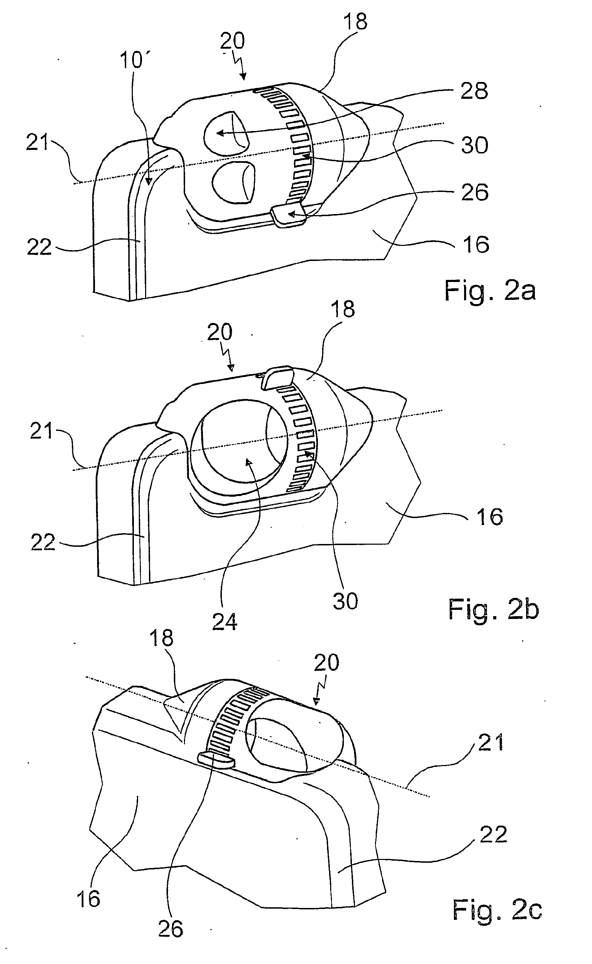

Das in den Figuren 2a bis 2c dargestellte Ausführungsbeispiel einer erfindungsgemäßen Handkreissäge stimmt weitgehend mit dem vorstehend beschriebenen Ausführungsbeispiel überein, so daß teilweise auf die vorstehende Beschreibung verwiesen werden kann. Hierbei ist nur eine perspektivische Teilansicht dargestellt, die den erfindungsgemäßen Mechanismus wiedergibt.

Auch diese Handkreissäge weist ein senkrecht stehendes Sägeblatt auf, das in herkömmlicher Weise von einem Elektromotor angetrieben wird und durch eine Abdeckung 10' eingeschlossen wird, um den Benutzer vor den im Betrieb entstehenden Sägespänen zu schützen und eine Verletzung durch das Sägeblatt zu verhindern.

Während des Betriebs der Handkreissäge werden die Sägespäne innerhalb der Abdeckung 10' an einem Vorderbereich 16 nach oben geblasen und gelangen dort in ein Zuleitungsrohr 18, das sich in Strömungsrichtung konisch erweitert und schließlich in einen zylindrischen Bereich übergeht. Das Zuleitungsrohr 18 ist hierbei nach unten hin offen und mündet in einen trommelförmigen Drehschieber 20, der um eine Drehachse 21 drehbar ist und die Sägespäne in Abhängigkeit von seiner Drehstellung entweder nach außen abführt oder in einen Hinterbereich 22 der Abdeckung 10' weiterführt. Die Querschnittsform des Zuleitungsrohrs 18 sollte strömungsoptimiert sein und muß nicht notwendigerweise eine konische Form aufweisen.

In der in Figur 2a dargestellten Stellung des Drehschiebers 20 werden die Sägespäne von dem Drehschieber 20 nicht nach außen abgeführt, sondern innerhalb der Abdeckung 10' in deren Hinterbereich 22 weitergeführt, wo sie schließlich durch eine Austrittsöffnung an der Unterseite der Abdeckung 10' entweichen. Hierzu weist der Drehschieber 20 ein integriertes Führungsrohr 24 auf, das sich mit dem Drehschieber 20 dreht und die Sägespäne in Abhängigkeit von der Drehstellung des Drehschiebers 20 in eine bestimmte Richtung abführt. In der in Figur 2a dargestellten Stellung des Drehschiebers 20 leitet das Führungsrohr 24 die aus dem Zuleitungsrohr 18 kommenden Späne schräg nach unten in die Abdeckung 10', wo sie schließlich durch die an der Unterseite der Abdeckung 10' angeordnete Austrittsöffnung entweichen. Die Abdeckung 10' ist deshalb so geformt, daß die Mündungsöffnung des Führungsrohrs 24 in der in Figur 2a dargestellten Stellung des Drehschiebers 20 vollständig innerhalb der Abdeckung 10' liegt. Die Abdeckung 10' erstreckt sich deshalb an der Unterseite des Drehschiebers 20 in seitlicher Richtung über einen Winkelbereich, der größer ist als der Öffnungswinkel der Mündungsöffnung des Führungsrohrs 24, damit die Mündungsöffnung vollständig umschlossen werden kann.

Im Gegensatz dazu werden die Sägespäne in der in Figur 2b dargestellten Stellung des Drehschiebers 20 seitlich nach außen abgeführt, da das Führungsrohr 24 in dieser Stellung zur Seite gedreht ist, so daß die Mündungsöffnung des Führungsrohrs 24 frei liegt.

Schließlich werden die Sägespäne in der in Figur 2c dargestellten Stellung des Drehschiebers 20 von dem Führungsrohr 24 schräg nach oben abgeführt.

Der Benutzer kann den Drehschieber 20 also so einstellen, daß die austretenden Sägespäne möglichst wenig stören. Hierzu ist an der Außenseite des Drehschiebers 20 ein Griff 26 angeformt, der eine manuelle Drehung des Drehschiebers 20 erleichtert. Demselben Zweck dienen auch Griffmulden 28 und eine Rändelstruktur 30, die an dem Drehschieber 20 angeformt sind.

Die drehbare Lagerung des trommelförmigen Drehschiebers 20 erfolgt an Führungsdurchmessern, die in der Abdeckung 10' von entsprechend angeformten Lagerschalen aufgenommen werden.

Weiterhin sind Rastelemente vorgesehen, welche eine Arretierung des Drehschiebers 20 in verschiedenen Drehstellungen ermöglichen.

Ferner bildet das in den Drehschieber 20 integrierte Führungsrohr 24 einen Anschlußstutzen, an den ein Staubbeutel oder ein Staubsaugerschlauch angeschlossen werden kann. Das Führungsrohr 24 erweitert sich deshalb zu seiner Mündungsöffnung hin konisch, um einen Klemmsitz des Staubbeutels bzw. des Staubsaugerschlauchs auf dem Anschlußstutzen zu erreichen.

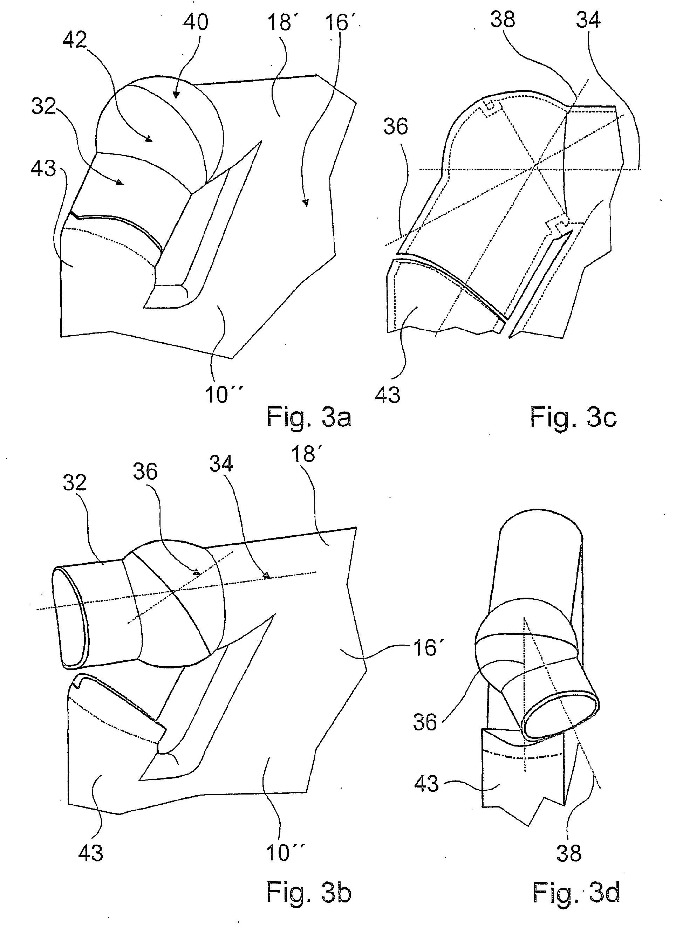

Das in den Figuren 3a bis 3c dargestellte Ausführungsbeispiel einer erfindungsgemäßen Handkreissäge stimmt ebenfalls weitgehend mit den vorstehend beschriebenen Ausführungsbeispielen überein, so daß zur Ergänzung auch auf die vorstehende Beschreibung verwiesen wird. Auch bei diesem Ausführungsbeispiel ist nur eine perspektivische Teilansicht dargestellt, die den erfindungsgemäßen Mechanismus wiedergibt.

Hierbei werden die im Betrieb der Handkreissäge entstehenden Sägespäne in einem Vorderbereich 16' einer Abdeckung 10'' zunächst nach oben geblasen und gelangen dort in ein weitgehend zylindrisches Zuleitungsrohr 18', das in ein Schwenkrohr 32 mündet und eine im wesentlichen waagerecht verlaufende Längsachse 34 aufweist.

Das Schwenkrohr 32 ist hierbei um eine vorgegebene Drehachse 36 schwenkbar, wobei das Schwenkrohr 32 eine Längsachse 38 aufweist, die mit der Drehachse 36 denselben Winkel einschließt wie die Längsachse 34 des Zuleitungsrohrs 18'. Diese geometrische Anordnung ermöglicht es, daß das Schwenkrohr 32 in der in Figur 3b dargestellten Drehstellung mit dem Zuleitungsrohr 18' fluchtet, so daß die Sägespäne ohne Umlenkung aus dem Schwenkrohr 32 austreten.

In der in Figur 3d dargestellten Drehstellung des Schwenkrohrs 32 werden die Sägespäne dagegen schräg zur Seite abgegeben.

An der Stoßstelle zwischen dem Schwenkrohr 32 und dem Zuleitungsrohr 18' weisen das Zuleitungsrohr 18' und das Schwenkrohr 32 sphärisch geformte Anschlußstücke 40 bzw. 42 auf, wobei die Anschlußstücke 40, 42 den gleichen Außendurchmesser aufweisen.

Dies bietet zum einen den Vorteil, daß die Außenkonturen des Zuleitungsrohrs 18' und des Schwenkrohrs 32 ansatzlos ineinander übergehen, was zu einem optischen ansprechenden Gesamteindruck beiträgt.

Zum anderen werden auf diese Weise auch bei einer Drehung des Schwenkrohrs 32 Kontursprünge an der Stoßstelle vermieden.

Schließlich verdeutlicht die kugelförmige Verdickung an der Stoßstelle zwischen dem Zuleitungsrohr 18' und dem Schwenkrohr 32 die Drehfunktion des schwenkrohrs 32, die somit selbsterklärend ist.

In der in Figur 3a und 3c dargestellten Stellung des Schwenkrohrs 32 mündet das Schwenkrohr 32 dagegen in ein Anschlußrohr 43 in der Abdeckung 10'', so daß die Späne innerhalb der Abdeckung 10'' weitergeführt werden und schließlich durch eine Austrittsöffnung an der Unterseite der Abdeckung 10'' entweichen.

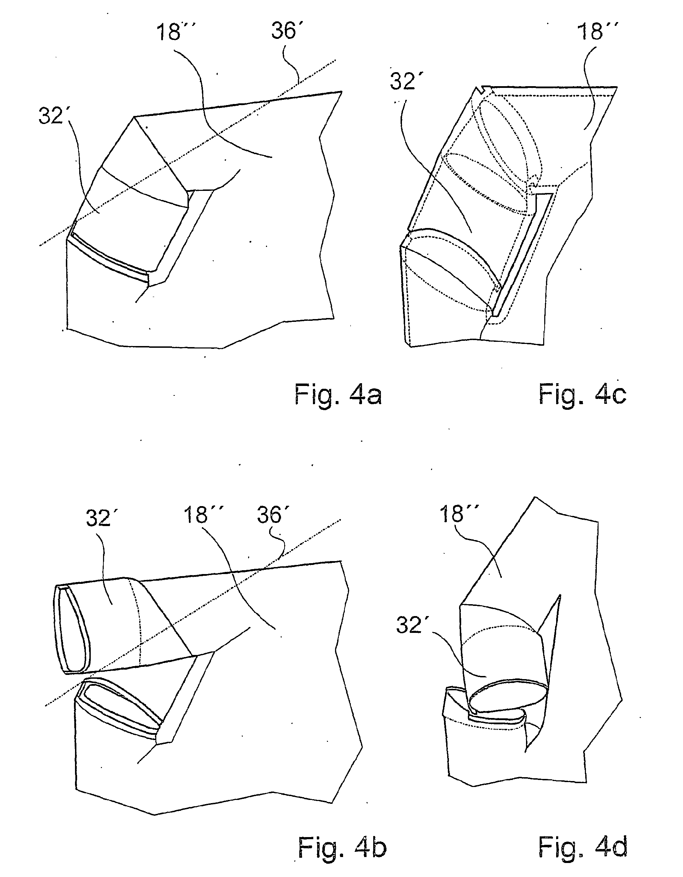

Das in den Figuren 4a bis 4d dargestellte Ausführungsbeispiel einer erfindungsgemäßen Handkreissäge stimmt weitgehend mit dem vorstehend beschriebenen und in den Figur 3a bis 3d dargestellten Ausführungsbeispiel überein, so daß im folgenden für einander entsprechende Bauteile entsprechende Bezugszeichen verwendet werden und zur Vermeidung von Wiederholungen auf die vorstehende Beschreibung verwiesen wird.

Die Besonderheit dieses Ausführungsbeispiels besteht darin, daß das Zuleitungsrohr 18'' und das Schwenkrohr 32' an der Stoßstelle keine kugelförmige Verdickung aufweisen, wodurch sich ein anderer optischer Eindruck ergibt.

### Bezugszeichen

- 8: Sägeblatt
- 10,10',10'': Abdeckung
- 12: Klappe
- 13: Schwenkachse
- 14: Schwenkrohr
- 15: Austrittsöffnung
- 16, 16': Vorderbereich der Abdeckung
- 18,18',18'': Zuleitungsrohr
- 20: Drehschieber
- 21: Drehachse
- 22: Hinterbereich der Abdeckung
- 24: Führungsrohr
- 26: Griff
- 28: Griffmulden
- 30: Rändelstruktur
- 32,32': Schwenkrohr
- 34: Längsachse des Zuleitungsrohrs
- 36,36': Drehachse des Schwenkrohrs
- 38: Längsachse des Schwenkrohrs
- 40: Anschlußstück des Zuleitungsrohrs
- 42: Anschlußstück des Schwenkrohrs
- 43: Anschlußrohr

## Patentansprüche

1. Werkzeugmaschine zur Bearbeitung eines Werkstücks, insbesondere Handkreissäge, mit einer Abdeckung (10, 10', 10'') zum Schutz eines Benutzers vor im Betrieb entstehenden Bearbeitungsresten des Werkstücks sowie einer verstellbaren Resteführung (12, 14, 20, 32, 32') zum Abführen mindestens eines Teils der Bearbeitungsreste durch eine Austrittsöffnung in einer bestimmten Richtung entsprechend der Stellung einer Mündungsöffnung der Resteführung (12, 14, 20, 32, 32'), wobei die Resteführung (12, 14, 20, 32, 32') so verstellbar ist, dass in einer Stellung der Resteführung (12, 14, 20, 32, 32') mindestens ein Teil der Bearbeitungsreste innerhalb der Abdeckung (10, 10', 10'') weitergeführt wird, **dadurch gekennzeichnet, dass** die Resteführung (12, 14, 20, 32, 32') in einer geschlossenen Stellung der Mündungsöffnung betreibbar ist.

2. Werkzeugmaschine nach Anspruch 1, **dadurch gekennzeichnet, dass** die Resteführung ein Schwenkrohr (14, 24, 32, 32') aufweist, das um eine Schwenkachse (13, 21, 36, 36') schwenkbar ist.

3. Werkzeugmaschine nach Anspruch 2, **dadurch gekennzeichnet, daß** das Schwenkrohr (14, 24, 32, 32') in einer Stellung innerhalb der Abdeckung (10, 10', 10'') und in einer anderen Stellung außerhalb der Abdeckung (10, 10', 10'') mündet.

4. Werkzeugmaschine nach Anspruch 2 und/oder Anspruch 3, **dadurch gekennzeichnet, daß** zur Zuführung der Bearbeitungsreste ein Zuleitungsrohr (18, 18', 18'') vorgesehen ist, das in das Schwenkrohr (24, 32, 32') mündet, wobei das Schwenkrohr (24, 32, 32') relativ zu dem Zuleitungsrohr (18, 18', 18'') schwenkbar ist.

5. Werkzeugmaschine nach Anspruch 4, **dadurch gekennzeichnet, daß** das Zuleitungsrohr (18', 18'') und das Schwenkrohr (32, 32') Längsachsen (34, 38) aufweisen, die mit der Schwenkachse (36, 36') jeweils im wesentlichen den gleichen Winkel einschließen.

6. Werkzeugmaschine nach mindestens einem der Ansprüche 2 bis 5, **dadurch gekennzeichnet, daß** zur Weiterführung der Bearbeitungsreste innerhalb der Abdeckung (10, 10', 10'') ein Anschlußrohr (43) vorgesehen ist, wobei das Schwenkrohr (32, 32') in eine Stellung schwenkbar oder drehbar ist, in der das Schwenkrohr (32, 32') in das Anschlußrohr (43) mündet.

7. Werkzeugmaschine nach Anspruch 1, **dadurch gekennzeichnet, daß** die Resteführung einen Drehschieber (20) aufweist.

8. Werkzeugmaschine nach Anspruch 7, **dadurch gekennzeichnet, daß** in den Drehschieber (20) ein Führungsrohr (24) integriert ist, das die Bearbeitungsreste in eine bestimmte Richtung abführt, die von der Drehstellung des Drehschiebers (20) abhängt.

9. Werkzeugmaschine nach mindestens einem der vorhergehenden Ansprüche, **dadurch gekennzeichnet, daß** die Resteführung einen Anschlußstutzen für eine externe Resteabsaugung oder einen Aufnahmebehälter aufweist.

10. Werkzeugmaschine nach Anspruch 9, **dadurch gekennzeichnet, daß** der Anschlußstutzen konisch geformt ist.

11. Werkzeugmaschine nach mindestens einem der vorhergehenden Ansprüche, **dadurch gekennzeichnet, daß** die Resteführung so verstellbar ist, daß die Resteführung in einer Stellung eine gemeinsame Außenkontur mit der Abdeckung (10, 10', 10'') aufweist.

12. Werkzeugmaschine nach mindestens einem der vorhergehenden Ansprüche, **dadurch gekennzeichnet, daß** die Resteführung kontinuierlich oder stufenweise verstellbar ist.

13. Werkzeugmaschine nach mindestens einem der vorhergehenden Ansprüche, **dadurch gekennzeichnet, daß** Rastmittel vorgesehen sind, so daß die Resteführung in mindestens einer Raststellung einrastet.

14. Werkzeugmaschine nach mindestens einem der vorhergehenden Ansprüche, **dadurch gekennzeichnet, daß** ein Federelement vorgesehen ist, daß die Resteführung in eine bestimmte Stellung bringt.

15. Vorrichtung mit einer Abdeckung (10, 10', 10'') und einer Resteführung für eine Werkzeugmaschine nach einem der vorhergehenden Ansprüche.

## Claims

1. Machine tool for machining a workpiece, in particular handheld circular saw, having a cover (10, 10', 10'') for protecting a user from machining residues of the workpiece which are generated in operation, and having an adjustable residue guide (12, 14, 20, 32, 32') for leading away at least a part of the machining residues through an outlet opening in a certain direction corresponding to the position of an aperture opening of the residue guide (12, 14, 20, 32, 32'), with the residue guide (12, 14, 20, 32, 32') being adjustable in such a way that, in one position of the residue guide (12, 14, 20, 32, 32'), at least a part of the machining residues are conveyed onward within the cover (10, 10', 10''), **characterized in that** the residue guide (12, 14, 20, 32, 32') can be operated in a closed position of the aperture opening.

2. Machine tool according to Claim 1, **characterized in that** the residue guide has a pivoting tube (14, 24, 32, 32') which is pivotable about a pivot axis (13, 21, 36, 36').

3. Machine tool according to Claim 2, **characterized in that** the pivoting tube (14, 24, 32, 32'), in one position, opens out within the cover (10, 10', 10''), and in another position, opens out outside the cover (10, 10', 10'').

4. Machine tool according to Claim 2 and/or Claim 3, **characterized in that**, for the supply of the machining residues, a delivery tube (18, 18', 18'') is provided, which delivery tube (18, 18', 18'') opens out into the pivoting tube (24, 32, 32'), with the pivoting tube (24, 32, 32') being pivotable relative to the delivery tube (18, 18', 18'').

5. Machine tool according to Claim 4, **characterized in that** the delivery tube (18', 18'') and the pivoting tube (32, 32') have longitudinal axes (34, 38) which in each case enclose substantially the same angle with the pivot axis (36, 36').

6. Machine tool according to at least one of Claims 2 to 5, **characterized in that**, in order to convey the machining residues onward within the cover (10, 10', 10"), a connecting tube (43) is provided, with the pivoting tube (32, 32') being pivotable or rotatable into a position in which the pivoting tube (32, 32') opens out into the connecting tube (43).

7. Machine tool according to Claim 1, **characterized in that** the residue guide has a rotary slide valve (20).

8. Machine tool according to Claim 7, **characterized in that** a guide tube (24) is integrated into the rotary slide valve (20), which guide tube (24) leads the machining residues away in a certain direction which depends on the rotational position of the rotary slide valve (20).

9. Machine tool according to at least one of the preceding claims, **characterized in that** the residue guide has a connecting piece for an external residue extraction device or a receiving container.

10. Machine tool according to Claim 9, **characterized in that** the connecting piece is of conical shape.

11. Machine tool according to at least one of the preceding claims, **characterized in that** the residue guide is adjustable in such a way that the residue guide, in one position, has a common outer contour with the cover (10, 10', 10'').

12. Machine tool according to at least one of the preceding claims, **characterized in that** the residue guide is adjustable in a continuous or stepped fashion.

13. Machine tool according to at least one of the preceding claims, **characterized in that** latching means are provided, so that the residue guide latches in at least one latching position.

14. Machine tool according to at least one of the preceding claims, **characterized in that** a spring element is provided, which spring element places the residue guide into a certain position.

15. Device having a cover (10, 10', 10'') and a residue guide for a machine tool according to one of the preceding claims.

## Revendications

1. Machine-outil pour travailler des pièces, notamment scie circulaire portative comportant un capot 10, 10', 10" pour protéger l'utilisateur contre les copeaux dégagés par le travail de la pièce ainsi qu'un guide-copeaux réglable 12, 14, 20, 32, 32' pour évacuer au moins une partie des copeaux par un orifice de sortie dans une certaine direction selon la position de l'embouchure du guide-copeaux 12, 14, 20, 32, 32', le guide-copeaux 12, 14, 20, 32, 32' étant réglable pour que dans une position, il transmette au moins une partie des copeaux dans le capot 10, 10', 10",
**caractérisée en ce que**
le guide-copeaux 12, 14, 20, 32, 32' peut fonctionner avec l'embouchure en position fermée.

2. Machine-outil selon la revendication 1,
**caractérisée en ce que**
le guide-copeaux comporte un tube pivotant 14, 24, 32, 32' qui pivote autour d'un axe 13, 21, 36, 36'.

3. Machine-outil selon la revendication 2,
**caractérisée en ce que**
dans une position, le tube pivotant 14, 24, 32, 32' débouche à l'intérieur du capot 10, 10', 10" et dans l'autre position, il débouche à l'extérieur du capot 10, 10', 10".

4. Machine-outil selon la revendication 2 et/ou la revendication 3,
**caractérisée en ce que**
pour guider les copeaux il est prévu un tube d'alimentation 18, 18', 18" débouchant dans le tube pivotant 24, 32, 32' qui peut pivoter par rapport au tube d'alimentation 18, 18', 18".

5. Machine-outil selon la revendication 4,
**caractérisée en ce que**
la conduite d'alimentation 18', 18" et le tube pivotant 32, 32' ont des axes longitudinaux 34, 38 faisant pratiquement le même angle avec l'axe de pivotement 36, 36'.

6. Machine-outil selon au moins l'une des revendications 2 à 5,
**caractérisée en ce que**
un tube de branchement 43 continue de guider les copeaux dans le capot 10, 10', 10", le tube pivotant 32, 32' pouvant pivoter ou tourner dans une position dans laquelle il débouche dans le tube de branchement 43.

7. Machine-outil selon la revendication 1,
**caractérisée en ce que**
le guide-copeaux comporte un boisseau 20.

8. Machine-outil selon la revendication 7,
**caractérisée en ce que**
le boisseau 20 intègre un tube de guidage 24 qui évacue les copeaux d'usinage dans une certaine direction dépendant de la position de rotation du boisseau 20.

9. Machine-outil selon au moins l'une des revendications précédentes,
**caractérisée en ce que**
le guide-copeaux comporte un ajutage de raccordement pour un aspirateur de copeaux, externe, ou un récipient.

10. Machine-outil selon la revendication 9,
**caractérisée en ce que**
l'ajutage de raccordement a une forme conique.

11. Machine-outil selon au moins l'une des revendications précédentes,
**caractérisée en ce que**
le guide-copeaux est réglable pour que dans une position il présente un contour commun avec le capot 10, 10', 10".

12. Machine-outil selon au moins l'une des revendications précédentes,
**caractérisée en ce que**
le guide-copeaux est réglable en continu ou par étape.

13. Machine-outil selon au moins l'une des revendications précédentes,
**caractérisée par**
des moyens d'encliquetage de façon que le guide-copeaux s'accroche dans au moins une position d'encliquetage.

14. Machine-outil selon au moins l'une des revendications précédentes,
**caractérisée par**
un élément à ressort qui met le guide-copeaux dans une certaine position.

15. Dispositif comportant un capot 10, 10', 10" et un guide-copeaux pour une machine-outil selon l'une des revendications précédentes.
